Europäisches Patentamt

European Patent Office

Office européen des brevets

(11) Veröffentlichungsnummer: **0 319 508 B1**

(12) **EUROPÄISCHE PATENTSCHRIFT**

(45) Veröffentlichungstag der Patentschrift: **23.12.92**

(21) Anmeldenummer: **88890217.8**

(22) Anmeldetag: **31.08.88**

(51) Int. Cl.⁵: **H01G 1/02**

(54) **Klemmenkasten mit Kondensatorrohr.**

(30) Priorität: **03.12.87 AT 3192/87
26.05.88 DE 8806837 U**

(43) Veröffentlichungstag der Anmeldung:
**07.06.89 Patentblatt 89/23**

(45) Bekanntmachung des Hinweises auf die
Patenterteilung:
**23.12.92 Patentblatt 92/52**

(84) Benannte Vertragsstaaten:
**AT BE CH DE FR IT LI NL**

(56) Entgegenhaltungen:
**DE-A- 754 976          DE-A- 1 029 482
DE-B- 2 700 530          FR-A- 2 036 298
FR-A- 2 159 980          GB-A- 1 233 766
JP-A- 5 716 546          JP-A- 5 720 138**

**"Modelec"-Katalog der Schulte Elektrotechnik GmbH, D.-5880 Lüdenscheid-Hellersen**

(73) Patentinhaber: **AUSTRIA Antriebstechnik G.
Bauknecht Aktiengesellschaft
G.-Bauknecht-Strasse 1
A-8740 Zeltweg-Spielberg (Steiermark)(AT)**

(72) Erfinder: **Egger, Otto
Hall 388
A-8911 Admont (Steiermark)(AT)**

(74) Vertreter: **Beer, Manfred, Dipl.-Ing. et al
Lindengasse 8
A-1070 Wien(AT)**

EP 0 319 508 B1

## Beschreibung

Die Erfindung betrifft einen Klemmenkasten mit Kondensatorrohr, zur gemeinsamen, zumindest weitgehend räumlich getrennten Unterbringung von elektrischen Anschlußklemmen einerseits und eines aus einer Gruppe mit unterschiedlichen Abmessungen je nach Verwendung ausgewählten Kondensators andererseits, wobei im Inneren des Kondensatorrohres eine Befestigungsanordnung für den Kondensator vorgesehen ist, die einen im Bodenbereich des Kondensatorrohres angeordneten, vom Boden des Kondensatorrohres abstehenden Befestigungsansatz mit einer Bohrung aufweist, die mit einem für alle Kondensatoren der Gruppe gleichen Zapfen am Kondensatorboden zusammenwirkt.

Klemmenkästen der genannten Art sind bekannt und werden für verschiedene Anschlußzwekke im Zusammenhang mit elektrischen Maschinen verwendet. Um verschiedenen Anwendungsfällen, Maschinenleistungen u. dgl. gerecht werden zu können, müssen Kondensatoren unterschiedlicher Abmessungen im Kondensatorrohr gleichermaßen sicher befestigt werden können. Zu diesem Zwecke sind bei der bekannten Ausführung im Inneren des Kondensatorrohres von der Mantelfläche abstehende Rippen, Stege oder Noppen vorgesehen, die mit unterschiedlicher Höhe ausgeführt werden und damit ein sicheres Festhalten des dem jeweiligen Kondensatorrohr zufolge der gegebenen Rippenhöhe zugehörigen Kondensators ermöglichen.

Der gravierende Nachteil bei der bekannten Ausführung ist, daß jeweils auf die Kondensatordimensionen und insbesondere auf den Kondensatordurchmesser abgestimmte Klemmenkästen auf Lager gehalten werden müssen, was insbesondere bei einer Vielzahl unterschiedlicher Verwendungen einen insgesamt erhöhten Aufwand und deutliche Mehrkosten bedingt.

Aus der DE-C-605 322 ist es bekannt, Kondensatoren in einer Bürstenhalterkappe elektrischer Maschinen einzubauen. Die für diesen Einbau besonders konstruierten Kondensatoren werden beispielsweise mit Hilfe eines Niets an der Bürstenhalterkappe befestigt. Das Problem das sich ergibt, wenn Kondensatoren unterschiedlicher Abmessungen einzubauen sind, ist in der DE-C-605 322 nicht erwähnt.

In dem Katalog "MODelec" der SCHULTE ELEKTROTECHNIK GMBH & Co. KG, Jüngerstr. 21, D-5880 Lüdenscheid-Hellersen, BRD, insbesondere auf den Seiten 4 und 5 desselben ist ein Klemmenkasten mit verschiedenen Einschubteilen für die Seitenwände dargestellt. An einem dieser auf Seite 5 dargestellten Einschubteile ist ein Kondensator über einen Gewindezapfen in einen Ansatz am Einschubteil eingesetzt.

Aufgabe der Erfindung ist es, einen Klemmenkasten der eingangs genannten Art so auszubilden, daß die geschilderten Nachteile vermieden werden und daß insbesondere durch die Kondensatorbefestigung im Kondensatorrohr kein unnötiger Mehraufwand im Hinblick auf die Produktvielfalt und die Lagerhaltung erforderlich ist.

Dies wird gemäß der Erfindung dadurch erreicht, daß die Bohrung im Befestigungsansatz mit einer glatten Innenfläche ausgebildet ist und mit einem Außengewinde am Zapfen, das für alle Kondensatoren der Gruppe gleich ist, zusammenwirkt und daß der Befestigungsansatz mittels sternförmig angeordneter Rippen gegen den Boden und die angrenzenden Wandbereiche des Kondensatorrohres abgestützt ist.

Bei der Erfindung braucht die Befestigung des Kondensators im Kondensatorrohr nicht mehr auf die tatsächlichen Außenabmessungen des jeweils einzusetzenden Kondensators Rücksicht zu nehmen. Vielmehr können ident ausgebildete Klemmenkästen für in weiten Grenzen beliebig große Kondensatoren verwendet werden - als Grenze nach oben sind für die Kondensatorabmessungen natürlich die Innenabmessungen des Kondensatorrohres gegeben.

Da bei der Erfindung die Bohrung im Befestigungsansatz mit einer glatten Innenfläche ausgebildet ist und mit einem Außengewinde am Zapfen, das für alle Kondensatoren der Gruppe gleich ist, zusammenwirkt, graben sich die Gänge des am Zapfen des Kondensators vorgesehenen Außengewindes in die Innenwand der zunächst gewindelosen Aufnahmebohrung ein.

Dadurch, daß der Ansatz mittels sternförmig angeordneter Rippen gegen den Boden und die angrenzenden Wandbereiche des Kondensatorrohres abgestützt ist, bleibt die Dimensionierung des Bodens des Kondensatorrohres von der erforderlichen Tiefe der Gewindebohrung unbeeinflußt, was eine Einsparung an Material und Gewicht des Klemmenkastens insgesamt ohne Beeinflussung der Festigkeit der Kondensatorbefestigung möglich macht.

Ein besonders fester und enger Sitz des Zapfens des Kondensators in dem mit der glatten Bohrung versehenen Ansatz ist dadurch sichergestellt, daß der Ansatz mittels sternförmig angeordneter Rippen gegen den Boden und die angrenzenden Wandbereiche des Kondensatorrohres abgestützt ist. Die erfindungsgemäße Befestigungsanordnung weist einen einfachen Aufbau und einen großen Einsatzbereich und eine hohe Festigkeit auf.

Günstige räumliche Verhältnisse ergeben sich bei der Erfindung, wenn die Bohrung mittig ausgeführt und das Außengewinde am Kondensator an einem zentral angeordneten Gewindezapfen angebracht ist. Damit vereinfacht sich die Herstellung des Klemmenkastens, da dessen Werkstoff weit weniger Einfluß auf die mechanische Festigkeit der Gewindebohrung nimmt als dies im Falle der Ausbildung eines Gewindezapfens am Boden des Kondensatorrohres der Fall wäre.

Nach einer vorteilhaften, weiteren Ausgestaltung der Erfindung ist vorgesehen, daß der Ansatz und die Rippen einstückig mit dem Boden und den Wänden des Kondensatorrohres, vorzugsweise im Spritz- oder Druckguß zusammen mit dem Klemmkasten, ausgebildet sind. Dies vereinfacht die Herstellung des Klemmenkastens und bietet größere Sicherheit im Hinblick auf die Befestigung des Kondensators.

Die Erfindung wird im folgenden näher an dem in der Zeichnung dargestellten Ausführungsbeispiel der Erfindung erläutert.

Fig. 1 zeigt eine Ansicht eines Klemmenkastens von unten bei abgenommenem Deckel und

Fig. 2 zeigt einen Schnitt entlang der Linie II-II in Fig. 1.

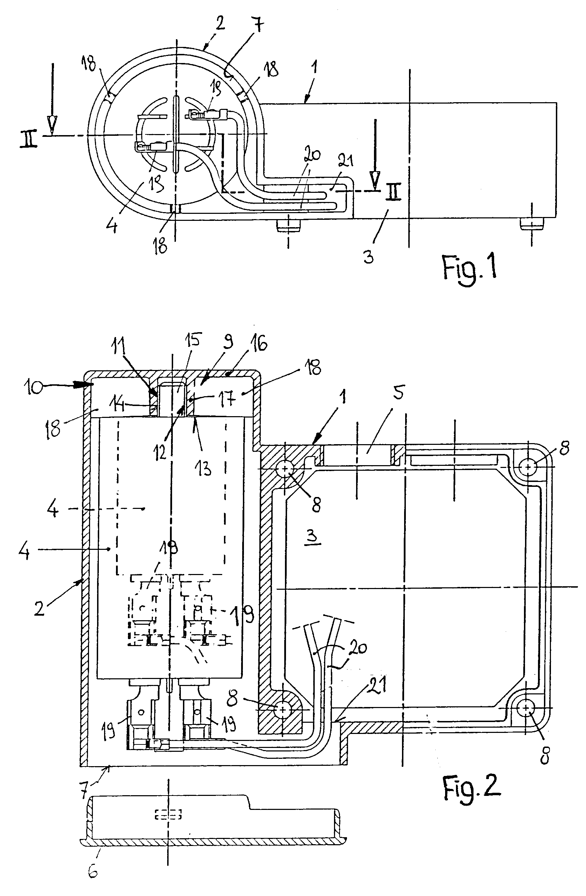

Ein Klemmenkasten 1 trägt einstückig angeformt ein Kondensatorrohr 2. Die aus Klemmkasten 1 und Kondensatorrohr 2 bestehende Einheit dient zur gemeinsamen, zumindest weitgehend räumlich getrennten Unterbringung von nicht weiter dargestellten elektrischen Anschlußklemmen od. dgl. im Klemmenraum 3 des Klemmkastens 1 einerseits und eines Kondensators 4 anderseits, der aus einer Gruppe mit unterschiedlichen Abmessungen je nach Verwendung als Motorkondensator (Betriebs- oder Anlaßkondensator) ausgewählt ist, im Kondensatorrohr 2. Der beispielsweise im Kunststoff-Spritzguß, Leichtmetall-Druckguß od. dgl. hergestellte Klemmkasten 1 ist an seiner in der Darstellung nach Fig. 2 oberen Seite mit einer Leitungsdurchführung 5 und an seiner Unterseite mit einer durch einen Deckel 6 dicht verschließbaren Öffnung 7 versehen und weist in den Ecken des Klemmenraumes 3 Bohrungen 8 zur Befestigung an einem nicht weiter dargestellten Maschinenteil od. dgl. bzw. unter Umständen auch zur Anbringung eines separaten Deckels auf dem Klemmenraum 3 auf.

Der im Inneren des Kondensatorrohres 2 eingesetzte Kondensator 4 ist dort mit einer Befestigungsanordnung 9 sicher gehalten. Diese Befestigungsanordnung weist eine im Bodenbereich 10 des Kondensatorrohres 2 angeordnete Aufnahmebohrung 11 auf, die mit einem für alle unterschiedlich großen Kondensatoren 4 einer Gruppe gleichen, zentral angeordneten Zapfen 15 am Kondensatorboden 13, der mit einem Außengewinde 12 versehen ist, zusammenwirkt. Die Aufnahmebohrung 11 am Kondensatorrohr 2 ist als mittig angeordnete Bohrung mit glatter Innenfläche 14 ausgeführt. Die Aufnahmebohrung 11 ist in einem vom Boden 16 des Kondensatorrohres 2 abstehenden Ansatz 17 angeordnet, der mittels drei sternförmig angeordneter Rippen 18 gegen den Boden 16 und die angrenzenden Wandbereiche des Kondensatorrohres 2 abgestützt ist.

Der Ansatz 17 und die Rippen 18 sind in der dargestellten Ausführung mit dem Boden 16 und den Wänden des Kondensatorrohres 2 einstückig ausgeführt, was die Herstellung als Kunststoff-Spritzgußformkörpereinfach macht und eine sichere Befestigung des Kondensators 4 erlaubt.

Der mit voll ausgezogener Linie in Fig. 2 eingezeichnete Kondensator 4 stellt für den dargestellten Klemmenkasten 1 im wesentlichen den größten verwendbaren Kondensator dar - strichliert ist in Fig. 2 auch ein kleinerer Kondensator 4 eingezeichnet, der - wie erwähnt - mit der gleichen Befestigungsanordnung 9 wie der große Kondensator 4 im völlig gleich ausgebildeten Klemmenkasten 1 gehalten werden kann.

Die beiden Anschlüsse 19 des Kondensators 4 sind mit zugehörigen Anschlußleitungen 20 verbunden, die durch eine Verbindungsöffnung in den Klemmenraum 3 geführt sind.

## Patentansprüche

1. Klemmenkasten (1) mit Kondensatorrohr (2), zur gemeinsamen, zumindest weitgehend räumlich getrennten Unterbringung von elektrischen Anschlußklemmen einerseits und eines aus einer Gruppe mit unterschiedlichen Abmessungen je nach Verwendung ausgewählten Kondensators (4) andererseits, wobei im Inneren des Kondensatorrohres (2) eine Befestigungsanordnung (9) für den Kondensator (4) vorgesehen ist, die einen im Bodenbereich (10) des Kondensatorrohres (2) angeordneten, vom Boden (16) des Kondensatorrohres (2) abstehenden Befestigungsansatz (17) mit einer Bohrung (14) aufweist, die mit einem für alle Kondensatoren (4) der Gruppe gleichen Zapfen (15) am Kondensatorboden (13) zusammenwirkt, dadurch gekennzeichnet, daß die Bohrung (14) im Befestigungsansatz (17) mit einer glatten Innenfläche ausgebildet ist und mit einem Außengewinde (12) am Zapfen (15), das für alle Kondensatoren (4) der Gruppe gleich ist, zusammenwirkt und daß der Befestigungsansatz (17) mittels sternförmig angeordneter Rippen (18) gegen den Boden (16) und die angrenzenden Wandbereiche des Kondensatorrohres (2) abgestützt ist.

2. Klemmenkasten nach Anspruch 1, dadurch gekennzeichnet, daß die Bohrung (14) mittig ausgeführt und das Außengewinde (12) am Kondensator (4) an einem zentral angeordneten Gewindezapfen (15) angebracht ist.

**3.** Klemmenkasten nach Anspruch 1 oder 2, dadurch gekennzeichnet, daß der Ansatz (17) und die Rippen (18) mit dem Boden (16) und den Wänden des Kondensatorrohres (2) und mit dem Klemmenkasten (1) einstückig ausgebildet sind.

## Claims

**1.** Terminal box (1) with capacitor tube (2) for joint, at least substantially spatially separate, accommodation of electrical connecting terminals, on the one hand, and a capacitor (4) selected according to application from a group with different dimensions, on the other hand, there being provided inside the capacitor tube (2) a fixing arrangement (9) for the capacitor (4) which has a fixing extension (17) arranged in the head zone (10) of the capacitor tube (2), projecting from the head (16) of the capacitor tube (2) and having a bore (14) cooperating with a stud (15) which is the same for all the capacitors (4) of the group and located on the head (13) of the capacitor, characterised in that the bore (14) in the fixing extension (17) is formed with a smooth inside surface and cooperates with an eternal thread (12) on the stud (15) which is the same for all the capacitors (4) of the group, and the fixing extension (17) is supported against the head (16) and the adjoining wall zones of the capacitor tube (2) by means of ribs (18) arranged in star form.

**2.** Terminal box according to claim 1, characterised in that the bore (14) is formed concentrically and the external thread (12) is located on a centrally arranged threaded stud (15) on the capacitor (4).

**3.** Terminal box according to claim 1 or 2, characterised in that the extension (17) and the ribs (18) are formed in one piece with the head (16) and the walls of the capacitor tube (2) and with the terminal box (1).

## Revendications

**1.** Boîtier de fixation (1) avec tube pour condensateur (2), pour le logement commun, au moins largement séparé dans l'espace des bornes de fixation, d'une part, et d'un condensateur (4), choisi suivant l'utilisation respective dans un groupe avec des dimensions différentes, d'autre part, à l'intérieur du tube de condensateur (2) étant prévu, pour le condensateur (4), un dispositif de fixation (9) qui présente un téton de fixation (17) comportant un trou (14) dans la région du fond (10) du tube de condensateur (2) et étant en saillie sur le fond (16) du tube de condensateur (2), qui coopère avec un même tourillon (15) pour tous les condensateurs (4) du groupe au fond (13) du condensateur, caractérisé en ce que le trou (14) dans le téton de fixation (17) a une surface interne lisse et coopère avec un filetage externe (12) sur le tourillon (15) qui est le même pour tous les condensateurs (4) du groupe, et en ce que le téton de fixation (17) s'appuie au moyen de nervures (18) disposées en étoile sur le fond (16) et la zone latérale limite du tube de condensateur (2).

**2.** Boîtier de fixation suivant la revendication 1, caractérisé en ce que le trou (14) est au centre et le filetage externe (12) sur le condensateur (4) se monte sur un tourillon central (15) taraudé.

**3.** Boîtier de fixation suivant la revendication 1 ou 2, caractérisé en ce que le téton (17) et les nervures (18) ne forment qu'un bloc avec le fond (16) et les parois du tube de condensateur (2) et avec le boîtier de fixation (1).

Fig.1

Fig.2